# EUROPEAN PATENT APPLICATION

(11) **EP 4 653 254 A1**
(43) Date of publication of application: **26.11.2025**
(21) Application number: 25176795.0
(22) Date of filing: 15.05.2025
(51) Int. Cl.: B60N 2/803, B60N 2/80

(54) **HEADREST AND WORK VEHICLE**

(30) Priority: 15.05.2024 JP 2024079512
(71) Applicant: Kubota Corporation, Osaka-shi, Osaka 556-8601 (JP)
(72) Inventor: TSUKADA, Yosuke, Sakai-shi, Osaka, 5900908 (JP); UKAI, Tomoyuki, Sakai-shi, Osaka, 5900908 (JP); NISHIMURA, Masayuki, Sakai-shi, Osaka, 5900908 (JP)
(74) Representative: Cabinet Beau de Loménie

(57) **Abstract**

A headrest includes a cushion section (11) configured to contact the back of a user's head, wherein the cushion section (11) includes a hollow portion (14) formed therein, and the cushion section (11) includes a bulging portion (15) bulging toward the back of the user's head at a central portion of an opposing surface (12) of the cushion section, the opposing surface facing the back of the user's head.

## Description

### Technical Field

The present invention relates to a headrest and a work vehicle.

### Background Art

Patent Document 1 describes a headrest for a work vehicle. This headrest is disposed in a driver's section of the work vehicle.

### Prior Art Documents

### Patent Documents

Patent Document 1: JP 2016-94130A

### Disclosure of the Invention

### Problem to be Solved by the Invention

In Patent Document 1, the structure of the headrest is not described in detail. Here, for example, in the headrest described in Patent Document 1, a configuration can be considered in which urethane foam is wrapped in a PVC (polyvinyl chloride) film, and a board member, such as oriented strand board, is disposed on the rear surface as support. With such a configuration, when the back of a user's head contacts the headrest, the urethane foam can absorb the impact. This allows the back of the user's head to be protected.

However, in such a configuration, the number of components constituting the headrest (i.e., the number of different types of components used in the headrest) tends to be relatively large. As a result, manufacturing costs tend to increase.

The objective of the present invention is to provide a headrest and a work vehicle capable of appropriately protecting the back of the user's head while also facilitating a reduction in manufacturing costs.

### Means for Solving Problem

A feature of a headrest according to the present invention is that the headrest includes: a cushion section configured to contact the back of a user's head, wherein the cushion section includes a hollow portion formed therein, and the cushion section includes a bulging portion bulging toward the back of the user's head at a central portion of an opposing surface of the cushion section, the opposing surface facing the back of the user's head.

With this configuration, the air in the hollow portion allows the cushion section to easily exhibit appropriate cushioning properties. When the back of the user's head contacts the headrest, the back of the head contacts the bulging portion. This makes it easier to avoid a situation where the user feels pain in the back of the head when the back of the head contacts the headrest, compared to a case where, for example, the central portion of the opposing surface is recessed in a direction away from the back of the user's head. Therefore, this configuration is capable of appropriately protecting the back of the user's head.

Also, this configuration tends to reduce the number of components in the headrest compared to, for example, a configuration in which urethane foam is wrapped in a PVC film and a board member, such as oriented strand board, is disposed on the rear surface as support. As a result, manufacturing costs can be easily reduced.

As described above, this configuration realizes a headrest capable of appropriately protecting the back of the user's head while also facilitating a reduction in manufacturing costs.

Furthermore, in the present invention, it is preferable that the opposing surface includes at least one recessed portion, and the recessed portion is recessed in a direction away from the back of the user's head and is adjacent to the bulging portion.

With this configuration, for example, if the user's body tilts to the left or right and the back of the user's head deviates from the position of the bulging portion, the back of the user's head can contact the recessed portion. When the back of the head contacts the recessed portion, the user can sense through the back of the head that the position of the back of the head has deviated from the normal position. This allows the user to easily maintain the back of the head in the normal position.

Furthermore, in the present invention, it is preferable that the headrest further includes a support member contacting a rear surface of the cushion section and configured to support the cushion section, the rear surface being opposite to the opposing surface; and a fixing member extending through the cushion section and configured to fix the cushion section to the support member, wherein the fixing member is attached to the recessed portion.

With this configuration, the cushion section can be more stably fixed to the support member compared to a case where the fixing member extends through a portion other than the recessed portion (e.g., the bulging portion). This allows the cushion section to be stably supported by the support member.

Furthermore, in the present invention, it is preferable that the rear surface includes a protruding portion protruding in a direction away from the back of the user's head, the protruding portion includes a hole communicating with the hollow portion, and the support member contacts the protruding portion in such a manner as to block the hole.

When the cushion section is manufactured by blow molding, the hollow portion can be easily formed inside the cushion section. However, in this case, a hole serving as an air vent, which is essential for blow molding, is formed in the cushion section.

Here, with this configuration, the hole is appropriately blocked by the support member. As a result, it is possible to prevent air in the hollow portion from leaking out through the hole.

A feature of a work vehicle according to the present invention is that the work vehicle includes the headrest described above.

With the headrest described above, the back of the user's head can be appropriately protected while manufacturing costs can be easily reduced. Therefore, this configuration realizes a work vehicle capable of appropriately protecting the back of the head of a user while also facilitating a reduction in manufacturing costs.

### Brief Description of the Drawings

FIG. 1 is a left side view of a work vehicle.
FIG. 2 is a longitudinal front view showing a configuration of a driver's section.
FIG. 3 is a longitudinal left side view showing a configuration of a headrest and other components.
FIG. 4 is a front view showing the configuration of the headrest and other components.
FIG. 5 is a rear view showing the configuration of the headrest and other components.
FIG. 6 is a transverse plan view showing the configuration of the headrest and other components.
FIG. 7 is a rear view showing a configuration of a cushion section.
FIG. 8 is a longitudinal left side view showing the configuration of the headrest and other components.

### Best Mode for Carrying out the Invention

Embodiments for carrying out the present invention will be described with reference to the drawings. Note that, unless otherwise specified, in the following description, the direction of an arrow F in the drawings is referred to as "front," the direction of an arrow B as "rear," the direction of an arrow L as "left," and the direction of an arrow R as "right." Also, the direction of an arrow U in the drawings is referred to as "up," and the direction of an arrow D as "down."

### Overall Configuration of Work Vehicle

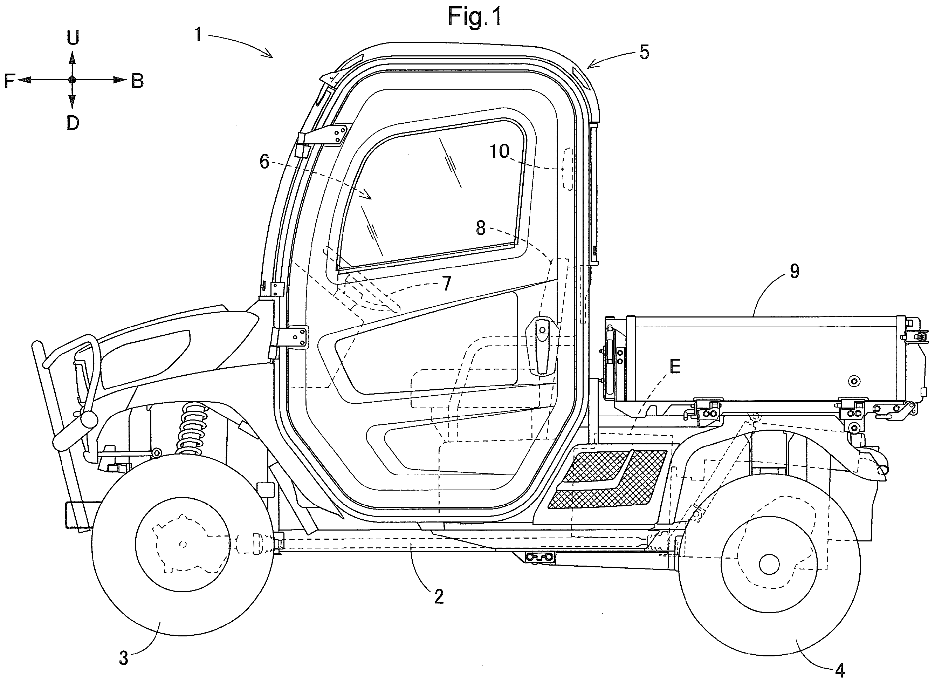

The work vehicle 1 shown in FIG. 1 is a multipurpose vehicle (utility vehicle). As shown in FIG. 1, the work vehicle 1 includes a body frame 2, left and right front wheels 3, and left and right rear wheels 4. The body frame 2, the left and right front wheels 3, and the left and right rear wheels 4 are disposed below the body (chassis) of the work vehicle 1.

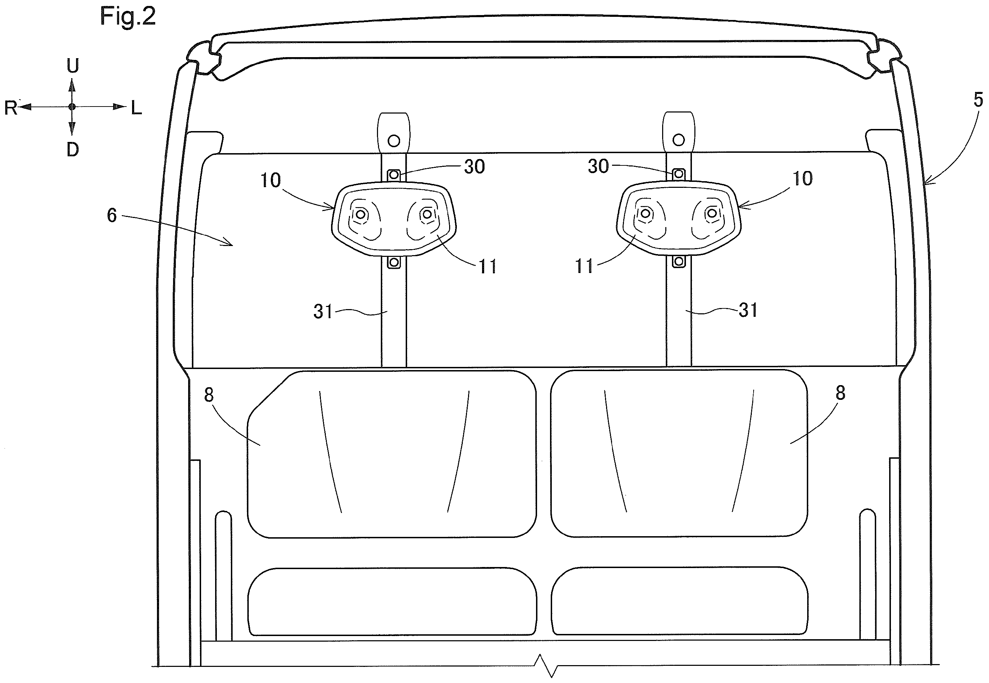

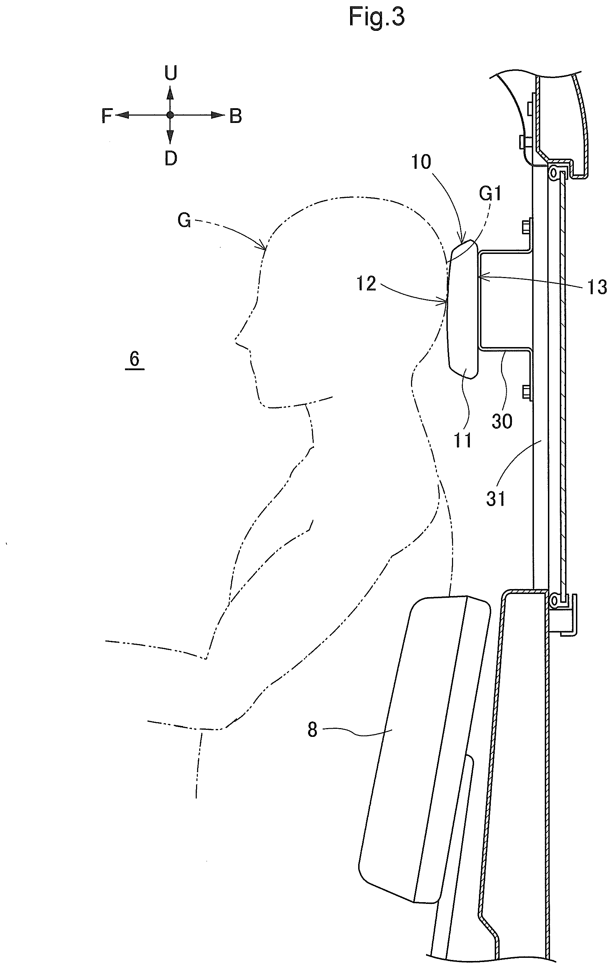

A driver's section 5 is disposed in a central portion of the work vehicle 1 in the front-rear direction. As shown in FIGS. 1 and 2, the driver's section 5 includes an occupant's space 6. The occupant's space 6 is capable of accommodating a user G (an occupant) (see FIG. 3).

A cargo bed 9 is disposed behind the driver's section 5. The cargo bed 9 can be loaded with transported items (e.g., straw, crops, or other cargo). An engine E is disposed below the cargo bed 9. The left and right front wheels 3 and the left and right rear wheels 4 are driven by power from the engine E. The work vehicle 1 travels by the driving of the left and right front wheels 3 and the left and right rear wheels 4.

As shown in FIG. 1, a steering wheel 7 and seats 8 are disposed in the occupant's space 6. The user G can steer the work vehicle 1 by operating the steering wheel 7 while sitting in one of the seats 8.

As shown in FIG. 2, in the present embodiment, two seats 8 are disposed. However, the present invention is not limited to this configuration. The number of seats 8 may be any number.

### Headrest

As shown in FIGS. 1 and 2, two headrests 10 are disposed in the occupant's space 6. That is to say, the work vehicle 1 includes two headrests 10. However, the present invention is not limited to this configuration. The number of headrests 10 may be any number.

The headrests 10 are respectively positioned above the seats 8. As shown in FIG. 3, each headrest 10 is positioned behind the head of the user G when the user G sits in the corresponding seat 8 and faces forward. The headrests 10 have the same structure.

### Cushion Section

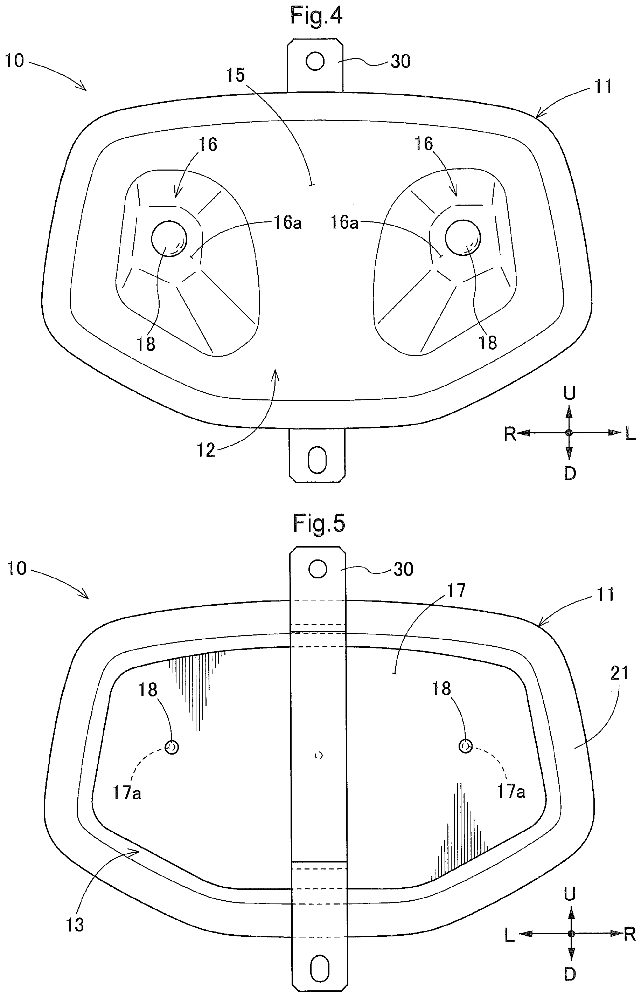

As shown in FIG. 3, each headrest 10 includes a cushion section 11 configured to contact a back G1 of the user G's head. Although not particularly limited, the cushion section 11 may be made of an elastic material (e.g., an elastomer material). As shown in FIGS. 4 and 5, the cushion section 11 has an opposing surface 12 and a rear surface 13.

The opposing surface 12 of the cushion section 11 is the surface that faces the back G1 of the user G's head. In the present embodiment, the opposing surface 12 is the front surface of the cushion section 11.

The rear surface 13 of the cushion section 11 is the surface opposite the opposing surface 12. In the present embodiment, the rear surface 13 is the back surface of the cushion section 11.

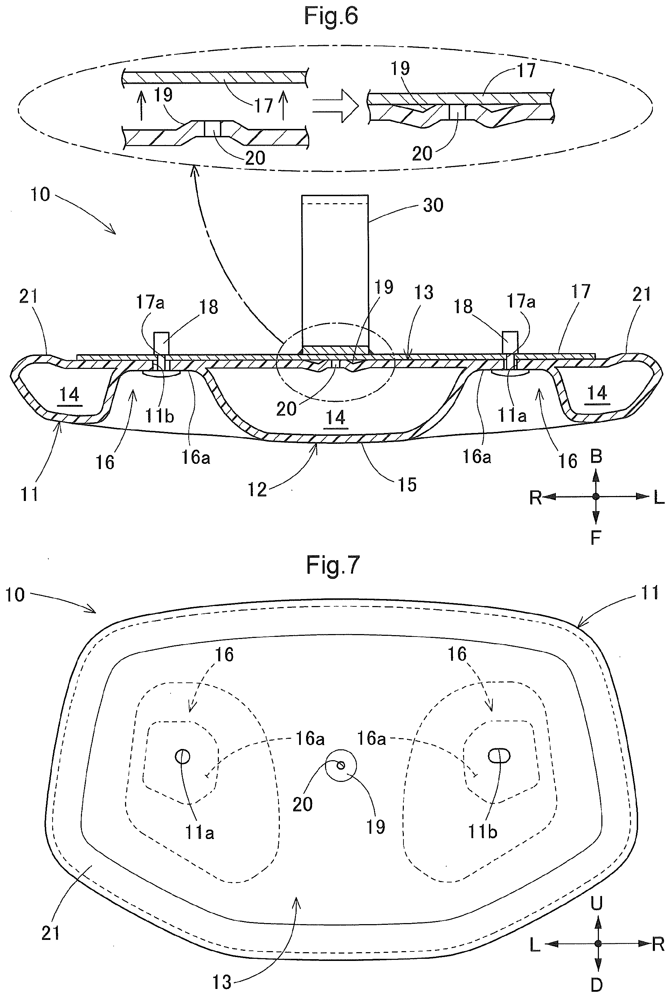

As shown in FIG. 6, a hollow portion 14 is formed inside the cushion section 11. The hollow portion 14 is a space filled with air. Note that "air" in the present specification is not limited to air in the narrow sense (a mixture of nitrogen, oxygen, etc.) but may be any gas.

As shown in FIGS. 4 and 6, a bulging portion 15 is included in the opposing surface 12. The bulging portion 15 is formed at the central portion of the opposing surface 12 in the left-right direction. Also, the bulging portion 15 is formed at the central portion of the opposing surface 12 in the up-down direction. That is to say, the bulging portion 15 is formed at a portion of the opposing surface 12 that is both the central portion in the up-down direction and the central portion in the left-right direction.

The bulging portion 15 bulges forward. In other words, the bulging portion 15 bulges toward the back G1 of the user G's head. Note that "bulging" here means protruding relative to the rearmost part (i.e., the part farthest from the back G1 of the user G's head) of the opposing surface 12 (i.e., a recessed bottom portion 16a described later). However, "bulging" may also mean protruding relative to the surrounding (adjacent) areas.

That is to say, the bulging portion 15, which bulges toward the back G1 of the user G's head, is formed at the central portion of the opposing surface 12, which is the surface of the cushion section 11 facing the back G1 of the user G's head.

As shown in FIGS. 4 and 6, at least one recessed portion 16 is included in the opposing surface 12. More specifically, two recessed portions 16 are included in the opposing surface 12, one on the left and one on the right. However, the present invention is not limited to this configuration. The number of recessed portions 16 may be any number.

Each recessed portion 16 is recessed rearward. In other words, each recessed portion 16 is recessed in a direction away from the back G1 of the user G's head.

Each recessed portion 16 is adjacent to the bulging portion 15. More specifically, the left recessed portion 16 is adjacent to the left side of the bulging portion 15. The right recessed portion 16 is adjacent to the right side of the bulging portion 15.

Note that the present invention is not limited to this configuration. For example, each recessed portion 16 may be adjacent to the upper side or the lower side of the bulging portion 15.

That is to say, each recessed portion 16 is recessed in a direction away from the back G1 of the user G's head and is adjacent to the bulging portion 15.

### Support Member and Fixing Member

As shown in FIGS. 5 and 6, each headrest 10 includes a support member 17. Although not particularly limited, the support member 17 is a metal plate-like member. The support member 17 contacts the rear surface 13.

A raised portion 21, which is raised in a frame-like shape, is formed along the peripheral edge of the rear surface 13. The raised portion 21 has a shape that conforms to the contour of the support member 17. The raised portion 21 serves to guide the position and orientation of the support member 17.

As shown in FIGS. 4 and 6, each headrest 10 includes two fixing members 18, one on the left and one on the right. Each fixing member 18 extends through the cushion section 11 and the support member 17 in the front-rear direction. Thus, each fixing member 18 fixes the cushion section 11 to the support member 17. By fixing the cushion section 11 to the support member 17, the cushion section 11 is supported by the support member 17.

Note that the present invention is not limited to this configuration. The number of fixing members 18 may be any number.

Thus, each headrest 10 includes the support member 17 that contacts the rear surface 13, which is the surface of the cushion section 11 opposite the opposing surface 12, and supports the cushion section 11. Each headrest 10 includes the fixing members 18 that extend through the cushion section 11 and fix the cushion section 11 to the support member 17.

In the present embodiment, the fixing members 18 are rivets. However, the present invention is not limited to this configuration, and the fixing members 18 may be bolts or the like.

The attachment of the fixing members 18 will be described in detail. As shown in FIGS. 6 and 7, the cushion section 11 has a first hole 11a and a second hole 11b. The first hole 11a is formed in the recessed bottom portion 16a of the left recessed portion 16. The second hole 11b is formed in the recessed bottom portion 16a of the right recessed portion 16. Note that the recessed bottom portions 16a are the portions of the recessed portions 16 located furthest toward the rear (i.e., farthest from the back G1 of the user G's head). In other words, the recessed bottom portions 16a are the bottom portions of the recessed portions 16.

As shown in FIGS. 5 and 6, each support member 17 has left and right through-holes 17a. The left through-hole 17a is provided at a position that communicates with the first hole 11a. The right through-hole 17a is provided at a position that communicates with the second hole 11b.

As shown in FIG. 6, the left fixing member 18 extends through the first hole 11a and the left through-hole 17a. The left recessed bottom portion 16a is fastened to the support member 17 by the left fixing member 18.

The right fixing member 18 extends through the second hole 11b and the right through-hole 17a. The right recessed bottom portion 16a is fastened to the support member 17 by the right fixing member 18.

With the configuration described above, the fixing members 18 are attached to the recessed portions 16. Note that, as shown in FIG. 7, the first hole 11a is a circular hole, while the second hole 11b is an elongated hole extending in the left-right direction.

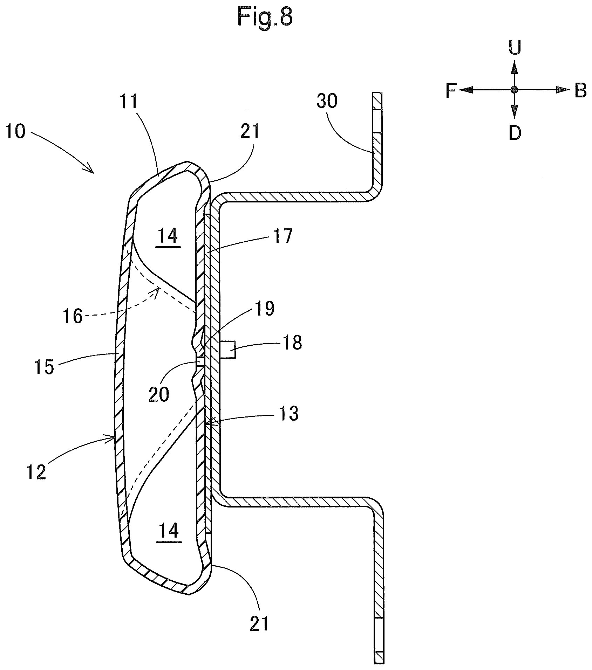

As shown in FIGS. 6 and 8, support stays 30 are fixed to the rear surfaces of the support members 17, for example, by welding. As shown in FIGS. 2 and 3, in the work vehicle 1, support frames 31 are disposed behind the seats 8. The support frames 31 are disposed at the rear end of the driver's section 5 and extend in the up-down direction. The support stays 30 are fixed to the support frames 31, for example, by bolt fastening.

With this configuration, the cushion sections 11 are supported by the support frames 31 via the support members 17 and the support stays 30. The headrests 10 are supported by the support frames 31 via the support stays 30.

### Protruding Portion and Hole

As shown in FIGS. 6 and 7, a protruding portion 19 is included in the rear surface 13 of each cushion section 11 at the central portion in both the up-down direction and the left-right direction. The protruding portion 19 protrudes rearward relative to the surrounding portions of the protruding portion 19. In other words, the protruding portion 19 protrudes in a direction away from the back G1 of the user G's head relative to the surrounding portions of the protruding portion 19.

That is to say, the protruding portion 19, which protrudes in a direction away from the back G1 of the user G's head, is included in the rear surface 13.

A hole 20 is formed in the protruding portion 19. The hole 20 communicates with the hollow portion 14. That is to say, the hole 20, which communicates with the hollow portion 14, is formed in the protruding portion 19. Although not particularly limited, the hole 20 may be an air vent formed during the blow molding of the cushion section 11.

As shown in FIGS. 6 and 8, the support member 17 contacts the protruding portion 19 while blocking the hole 20. Thus, the hole 20 is blocked by the front surface of the support member 17.

When fixing each cushion section 11 to the corresponding support member 17 with the fixing members 18, as shown in the enlarged view in FIG. 6, the support member 17 is pressed against the protruding portion 19 from the rear side. By pressing the support member 17 forward (or pressing the cushion section 11 rearward), the protruding portion 19 and its surrounding portions slightly deform, and the support member 17 and the protruding portion 19 press against each other in the front-rear direction. In this state, fixation is performed with the fixing members 18, maintaining a state in which the support member 17 presses the protruding portion 19 forward. As a result, the hole 20 is stably blocked by the support member 17.

With the configuration described above, the air in the hollow portions 14 allows the cushion sections 11 to easily exhibit appropriate cushioning properties. When the back G1 of the user G's head contacts one of the headrests 10, the back of the head G1 comes into contact with its bulging portion 15. This makes it easier to avoid a situation where the user G feels pain in the back of the head G1 when the back of the head G1 contacts the headrest 10, compared to a case where, for example, the central portion of the opposing surface 12 is recessed in a direction away from the back G1 of the user G's head. Therefore, the configuration described above provides appropriate protection for the back G1 of the user G's head.

Furthermore, this configuration tends to reduce the number of components in the headrests 10 compared to, for example, a configuration in which urethane foam is wrapped in a PVC film and a board member, such as oriented strand board, is disposed on the rear surface as support. As a result, manufacturing costs can be easily reduced.

As described above, this configuration realizes a headrest 10 that can appropriately protect the back G1 of the user G's head while also facilitating a reduction in manufacturing costs.

### Other Embodiments

(1) The recessed portions 16 may not be included in the opposing surface 12.
(2) The fixing members 18 may be attached to a portion of the cushion section 11 other than the recessed portions 16.
(3) The protruding portion 19 may not be included in the rear surface 13.
(4) The hole 20 may be formed in a portion of the rear surface 13 other than the protruding portion 19.
(5) The work vehicle 1 may be any type of work vehicle, such as a tractor, a rice transplanter, a combine harvester, etc.
(6) The headrests 10 may be disposed in applications other than the work vehicle 1. For example, the headrest 10 may be disposed in a passenger car not intended for work, a ship, an aircraft, furniture (e.g., a chair), and so on.
(7) The arrangement of a portion or all of the components may be reversed in the left-right direction or the front-rear direction.

The configurations disclosed in the above embodiments (including other embodiments, the same applies hereinafter) can be combined with configurations disclosed in other embodiments as long as no contradictions arise. Also, the embodiments disclosed in the present specification are examples, and the embodiments of the present invention are not limited thereto. Modifications may be made as appropriate within a scope that does not deviate from the purpose of the present invention.

### Industrial Applicability

The present invention can be applied to a headrest and a work vehicle.

## Claims

1. A headrest (10) comprising:
a cushion section (11) configured to contact the back of a user's head,
wherein the cushion section includes a hollow portion (14) formed therein, and
the cushion section includes a bulging portion (51) bulging toward the back of the user's head at a central portion of an opposing surface (12) of the cushion section, the opposing surface facing the back of the user's head.

2. The headrest according to claim 1, wherein
the opposing surface (12) includes at least one recessed portion (16), and
the recessed portion is recessed in a direction away from the back of the user's head and is adjacent to the bulging portion.

3. The headrest according to claim 2, further comprising:
a support member (17) contacting a rear surface (13) of the cushion section (11) and configured to support the cushion section, the rear surface being opposite to the opposing surface (12); and
a fixing member (18) extending through the cushion section and configured to fix the cushion section to the support member,
wherein the fixing member is attached to the recessed portion.

4. The headrest according to claim 3, wherein
the rear surface (13) includes a protruding portion (19) protruding in a direction away from the back of the user's head,
the protruding portion includes a hole (20) communicating with the hollow portion, and
the support member (17) contacts the protruding portion in such a manner as to block the hole.

5. A work vehicle comprising:
the headrest according to any one of claims 1 to 4.
